# EUROPEAN PATENT APPLICATION

(11) **EP 4 821 591 A1**
(43) Date of publication of application: **14.10.2026**
(21) Application number: 26164730.9
(22) Date of filing: 13.03.2026
(51) Int. Cl.: B01J 4/00, B01J 8/00, B01J 8/44

(54) **GAS DISTRIBUTION PLATE FOR A FLUIDIZED BED REACTOR, GAS INLET ASSEMBLY, AND FLUIDIZED BED REACTOR**

(30) Priority: 22.03.2025 LU 600709; 03.06.2025 LU 601908
(71) Applicant: Skeleton Technologies GmbH, 04420 Markranstädt (DE)
(72) Inventor: Markarian, Ohannes, 04420 Markranstädt (DE)
(74) Representative: KASTEL Patentanwälte PartG mbB

(57) **Abstract**

In order to improve uniformity and effectiveness of chlorination reactions the invention proposes a fluidized bed reactor (10) comprising a reactor chamber (12) and a gas distribution plate (32), wherein the gas distribution plate (32) are disposed at the bottom of the reactor chamber (12), wherein the gas distribution plate (32) includes pores that are configured to allow for gas to flow through the gas distribution plate (32), when installed in the fluidized bed reactor (10), wherein the gas distribution plate (32) is made of a plate material that mainly or exclusively consists a carbon material.

## Description

The invention relates to a gas distribution plate. The invention further relates to a gas inlet assembly and a fluidized bed reactor.

The particle sizes as used herein are measured by laser diffraction in a liquid medium. Auxiliary materials such as surfactants can be used. The evaluation of the measurement is carried out according to Mie and/or Fraunhofer. In a typical manner, the fraction X of particles with a size smaller than S is referred to as DX with size S, e.g. D90 of 30 µm means that 90 % of particles have a size smaller than 30 µm. This terminology is not limited to particle sizes and can be used for other size distributions.

CN 205 683 983 U discloses a fluidized bed gas distribution element for gas-solid reaction. The distribution element includes a metal support body welded to the bottom of the fluidized bed reactor, a metal porous distribution plate assembly arranged above the metal support body, and a metal pressure plate arranged above the metal porous distribution plate assembly.

CN 108 435 105 A discloses a combined gas distributor that includes a primary gas distributor and a secondary gas distributor. The primary gas distributor includes a gas distribution main pipe, a gas distribution branch pipe and a nozzle. The gas distribution branch pipe is connected, and the nozzles are evenly arranged on the gas distribution main pipe and the gas distribution branch pipe. The secondary gas distributor includes a lower porous plate and an upper layer of perforated plates, wherein each layer of plates has interlaced holes. The secondary gas distributor is arranged above the primary gas distributor.

Additional gas distribution elements are known from EP 3 617 177 A1 and EP 3 868 465 A1, for example.

WO 2019 / 005 743 A1 discloses a multi-inlet gas distributor for a fluidized bed chemical vapor deposition reactor. The distributor can be made of graphite and has multiple inlets evenly spaced from each other. The inlets are drilled with a pilot drill and a final drill. Thus, the distributor is not a porous material.

CN 104 383 811 B discloses a sand core gas plate. Exposing the sand core gas plate, which mainly includes silicon oxide (SiO₂), to typical reaction conditions of carbide-derived carbon chlorination reactions will rapidly decompose the gas plate into gaseous silicon tetrachloride (STC) and carbon dioxide (CO₂), thereby rendering it unsuitable for this type of reactions.

WO 2006 / 116 067 A1 discloses perforated polymeric sheets of polymeric material. Under the typical reaction conditions for carbide-derived carbon the polymer melts away rendering it unsuitable for this kind of reactions.

US 2010 / 0 071 770 A1 discloses a distributor plate with different hole cross-sections. The distributor plate is made of simple to machine materials, such as polymer or metal. The holes are machined into the solid material. Thus, the distributor plate is not porous and also unsuitable for the reaction conditions of carbide-derived carbon synthesis.

Gas distribution systems have an important role in gas-solid reaction in fluidized bed reactors, for example in chlorination reactions to manufacture carbide derived carbon. The gas distribution system in particular influences the effectiveness and uniformity of the process.

The primary function is to introduce the fluidizing gas, for example chlorine or a chlorine-inert gas mixture, uniformly across the cross-sectional area of the reactor. This allows that the solid carbide particles are suspended evenly in the gas stream, resulting in consistent fluidization. Uniform fluidization is an important aspect for achieving efficient mass and heat transfer between the gas and solid phases, which directly affects the rate and uniformity of the reaction.

It is the object of the invention to improve fluidizing bed reactors.

The object is achieved by the subject-matter of the independent claims. Preferred embodiments are subject-matter of the dependent claims.

The invention provides a gas distribution plate for a fluidized bed reactor, wherein the gas distribution plate includes pores that are configured to allow for gas to flow through the gas distribution plate, when installed in the fluidized bed reactor, wherein the gas distribution plate is made of a plate material that mainly or exclusively consists of a carbon material, preferably graphite or graphite-ceramic material.

The gas distribution plate is preferably suitable for a fluidized bed reactor that is suitable for synthesis of carbide-derived carbon.

Preferably, the pores have a pore size smaller than the D90 particle size of particles that are within the fluidized bed reactor during reaction in the fluidized bed reactor.

Preferably, the pores have a pore size smaller than 300 µm, preferably smaller than 200 µm, preferably smaller than 100 µm, preferably smaller than 50 µm, wherein optionally the pore size is greater than 1 µm to 10 µm.

Preferably, the pore volume is smaller than 20000 mm³/g, preferably smaller than 10000 mm³/g, preferably smaller than 9000 mm³/g, preferably smaller than 8000 mm³/g, preferably smaller than 7000 mm³/g.

Preferably, the porosity as measured by Hg porosimetry is at least 85 %, preferably at least 90 %, preferably at least 90.8 %, preferably at least 90.85%.

Preferably, the plate material is metal-free.

The invention provides a gas inlet assembly comprising a gas distribution structure and a gas distribution plate as previously described, wherein the gas distribution structure comprises a support structure that supports the gas distribution plate, and the gas distribution structure is configured for distributing gas flow from a gas inlet into a plenum that is bounded on one side by the gas distribution plate.

The gas inlet assembly is preferably suitable for a fluidized bed reactor that is suitable for synthesis of carbide-derived carbon.

Preferably, the gas distribution plate and the gas distribution structure are configured to allow gas flow from the plenum through the gas distribution plate, and the gas distribution plate prevents particles above a certain size from entering the plenum.

Preferably, the support structure includes a plurality of support struts that extend away from the gas inlet, and support the gas distribution plate.

Preferably, the support structure includes a plurality of support ribs that are supported by neighbouring support struts and extend therebetween, and the support ribs support the gas distribution plate.

Preferably, the support structure comprises a hole plate that has a pattern of holes formed therein, preferably to facilitate better gas distribution. The hole plate is preferably formed as a circular disk. The hole plate is preferably shaped to be able to cover the gas inlet.

Preferably, the gas distribution structure comprises the support struts, and the support struts bound a plurality of gas flow channels that extend away from the gas inlet.

Preferably, the gas distribution structure comprises the hole plate and the hole plate rests on the support struts.

Preferably, the support structure comprises a plurality of additional support struts that are aligned parallel to the radial direction. Preferably, each additional support strut is disposed between two adjacent support struts.

Preferably, the additional support struts are disposed within the gas flow channels.

Preferably, the support struts and/or the additional support struts include a plurality of protrusions and recesses that are configured such that the protrusions are suitable to support the gas distribution plate while the recesses are suitable to allow for a gas flow along the circumferential direction.

Preferably, the support struts further include circumferential openings that are configured to allow for a circumferential gas flow.

Preferably, the support ribs include a plurality of radial openings that are configured to allow for additional gas flow in the radial direction.

The invention provides a fluidized bed reactor comprising a reactor chamber, a gas distribution plate a previously described or a gas inlet assembly as previously described, wherein the gas distribution plate or the gas inlet assembly are disposed at the bottom of the reactor chamber.

The fluidized bed reactor is preferably suitable for synthesis of carbide-derived carbon.

Preferably, the reactor chamber is bounded by a shell that includes a plurality of shell elements that are optionally fastened to each other. Preferably, the shell elements are fastened along the vertical direction by means of a tongue and groove connection. Preferably the shell elements are fastened along the tangential or circumferential direction by means of a fastening element, such as a clip, that positively locks with a fastening protrusion on neighbouring shell elements.

Preferably, the reactor chamber is bounded by a shell that includes a plurality of shell elements each made as a single unitary, preferably cylindrical, shell element. Preferably, the reactor chamber is bounded by a shell that is made from a single unitary shell element.

Preferably, each shell element is made of a shell element material that mainly or exclusively consists a carbon material.

Preferably, the fluidized bed reactor further comprises a filter assembly that is disposed at the top of the reactor chamber and is configured to prevent particles above a certain particle size from leaving the reactor chamber.

Subsequently advantageous effects of the apparatus are described in more detail. It should be noted that not all advantageous have to be present at the same time or to the same degree.

The gas distribution plate is a porous plate that is placed at the bottom of the fluidized bed reactor before the gas inlet. This porous plate comprises very small pores that provide the gas inlet from its bottom, and the top side acts as the plenum base for the raw material solids. Though this gas distribution plate has a gas inlet from the bottom and solids at the top, it provides gas-solid separation. Though the plate is placed in between two graphite carbon chamber pieces, it is neither fixed nor attached by any mechanism like - glued attachment, metal attachment, screwed attachment.

In a specialized fluidized bed reactor designed for high-temperature gas-solid reactions, such as the synthesis of carbide-derived carbon, several advantageous features can be integrated to allow optimal performance, safety, and/or reaction uniformity. The reactor may include a lower ante-chamber, or pre-chamber, which is typically called a plenum, where the process gas, such as chlorine or mixtures thereof, e.g. with nitrogen or argon can be introduced. The planum is preferably situated beneath the main reactor chamber and is separated from it by the porous gas distribution plate. This plate is preferably made entirely of carbon, e.g. graphite.

The gas distribution plate is engineered to serve multiple purposes. Primarily, it can ensure the uniform distribution of incoming gases from the plenum into the reaction chamber above. At the same time, the plenum itself can help in improving the uniformity of the gas flow. The reactor chamber can operate under elevated temperatures, with a lower activation threshold typically ranging from 600 °C to 900°C, depending on the specific carbide material and desired porosity in the final carbon product. However, it is possible to have temperatures up to about 1300 °C, as the critical parts of the reactor can be made of suitable material, preferably carbon. The even distribution of gas that is enabled by the measures described above can improve consistent fluidization and may promote homogeneous reaction kinetics throughout the fluidized solid bed.

The gas distribution plate is preferably designed with a range of pore sizes, with most pores, i.e. at least more than 50 % of the pores, being smaller than the D90 particle size of the solid material within the chamber. More specifically, the pore sizes are generally below 300 microns, with increasing preference for sizes below 200 microns, 100 microns, and even 50 microns, depending on the application and material used. This sizing can prevent the solid particles from falling through the plate, ensuring a clear separation between the gas phase and the particulate bed. Furthermore, the pore sizes are large enough so as to not degrade the gas flow.

In addition to pore size, the physical properties of the plate are also carefully selected. The pore volume of the plate is kept below 20000 mm³/g, with improved values even lower, below 10000 mm³/g and down to 7000 mm³/g, to balance permeability and mechanical integrity. In particular, pressure differences between the plenum and the reactor chamber of only 1 mbar indicate excellent permeability for the gas flow through the plate. Furthermore, simulations indicate that up to 5 metric tons of solid material can be fluidized and supported by the plate.

The plate exhibits a comparatively high porosity of approximately 90.85%, as measured by mercury (Hg) porosimetry, which facilitates efficient gas flow while maintaining structural strength.

The plate can maintain a low bulk density of 0.126 g/cm³ and a total weight of just 310.5 grams, distributed across a volume of 2453.1 cm³. This results in a lightweight yet robust component that supports not only the bed of solid particles but also provides complete physical separation between the gas plenum and the reactor chamber above. Notably, the plate is preferably self-supporting. The plate is preferably not affixed by any adhesive, metallic, or mechanical attachment and relies on gravity to cover the plenum. It may also be held in place by its position between two chamber components, which allows for easy assembly, removal, and cleaning.

The gas distributor plate is capable of handling a volume flow of up to 250 m³/h (or 4000 L/min), thereby enabling a strong and stable flow of reactive gas (mixture) through the porous plate. Due to its configuration, the plate can also prevent weeping, which is the undesirable passage of solid particles or liquid droplets through the distributor into the plenum. This can help to avoid reducing reaction efficiency and/or prevent contamination.

The design is versatile and simple. By relying on material properties and/or geometry rather than mechanical fixing elements, the gas distribution plate offers easy maintenance, high chemical resistance, and/or excellent thermal stability, all while enabling uniform gas distribution and structural support. This contributes to better process control, enhanced reactor longevity, and more consistent product quality in high-temperature gas-solid reaction processes, such as CDC production.

It is another idea to prevent common operational issues such as channelling, where gas can flow through narrow paths in the bed and may leave significant portions of the solid stagnant. Thus, uneven conversion of the educts/reactants can be mitigated, so as to produce more uniform carbon material. Furthermore local overheating can be avoided. Similarly, dead zones can be avoided, as the gas can reach all areas of the bed uniformly. Overall this allows to improve CDC production, which is typically very sensitive to temperature and a precisely controlled gas-solid contact, which allows to fine-tune the pore structure of the final carbon material.

The material used for constructing the distributor are able to withstand both the chemical and thermal environments of the process. Chlorine is highly corrosive, and the operating temperatures can range from 600 °C to over 1300°C. Consequently, corrosion- and heat-resistant materials are used. However, the melting point of the material can become an issue, particularly for temperatures above 1100 °C. Thus, carbon is preferred as material for the gas distribution plate. Additionally, fine carbide powders or volatile by-products like titanium tetrachloride can be better prevented from condensing or accumulating on the distributor plate surface. This enables the pressure drop across the plate to stay low and can increase gas distribution uniformity, both of which affect process efficiency and reactor safety.

In some cases, the reactor can be equipped with back-flushing mechanisms to clear blockages in the distributor plate, or the fluidizing gas can be preheated to avoid condensation of volatile chlorides, for example.

While the reactor and its components is described with reference to chlorination of metal carbides to manufacture CDC, the skilled person will recognize that other gas-solid applications are possible.

Embodiments of the invention are described in more detail with reference to the accompanying schematic drawings that are listed below
Fig. 1 depicts a longitudinal section through an embodiment of a fluidized bed reactor;
Fig. 2 depicts an enlarged view of the bottom of the fluidized bed reactor; and
Fig. 3 depicts a separate view of a gas inlet assembly; and
Fig. 4 depicts another embodiment of a gas inlet assembly.

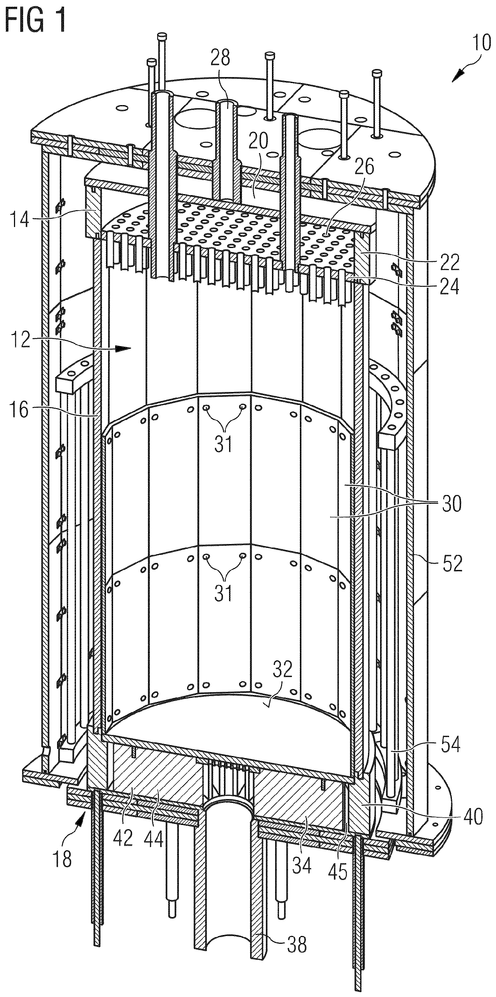

In Fig. 1 a fluidized bed reactor 10 is depicted. The fluidized bed reactor 10 comprises a reactor chamber 12. The reactor chamber 12 is formed (from top to bottom) by a filter assembly 14, a shell 16, and a gas inlet assembly 18. The reactor chamber 12 is preferably shaped as a cylinder.

The filter assembly 14 is configured to prevent solid material from leaving the reactor chamber 12, while at the same time allowing gas to escape. The filter assembly 14 is made of a carbon material, such as graphite. The filter assembly 14 may further include a top cover plate 20, a top wall 22, and a top support plate 24 that define a top chamber 26. The top chamber 26 is configured such that gas cannot escape except for a designated outlet 28. The support plate 24 supports a plurality of filter elements 26 that can be individually exchanged. The filter elements 26 are inserted into openings in the support plate 24 and extend into the reactor chamber.

The shell 16 comprises a plurality of shell elements 30. Each shell element is made of the carbon material. The shell elements 30 are mechanically fastened to each other using suitable fastening members (not shown). Individual shell elements 30 have a rectangular shape. The shell elements 30 include fastening protrusions 31 so that the shell elements 30 may be fastened to each other by positively locking the fastening members to the fastening protrusions 31 of neighbouring shell elements 30.

At the top, the shell 16 is connected to the filter assembly 14, specifically the top wall 22 in a gas-tight manner. The connection can be formed as a flat face sealing or a tongue and groove connection.

In a variant that is not shown for sake of brevity, the shell 16 comprises a plurality of shell elements 30. The shell elements 30 preferably have an annular shape. The shell elements 30 may be stacked on top of each other without additional fastening members. The shell elements 30 may form a flat face sealing between each other.

In another variant, the shell 16 may consist of a single shell element 30 that is formed as a single unitary member.

The gas inlet assembly 18 is configured for gas-solid separation and distribution of the gas into the reactor chamber 12. The gas inlet assembly 18 is preferably made of the carbon material. The gas inlet assembly 18 includes a gas distribution plate 32 and a gas distribution structure 34. The gas distribution plate 32 and the gas distribution structure 34 bound a plenum 36, which can be called an antechamber to the reactor chamber 12.

The gas distribution plate 32 is porous. The pore size is adapted to the particles with which the intended reaction takes place. The pore size is chosen from 10 µm to 300 µm, preferably such that 90% of the pores have a pore size smaller than 90 % of the particulate material that gets filled into the reactor chamber 12.

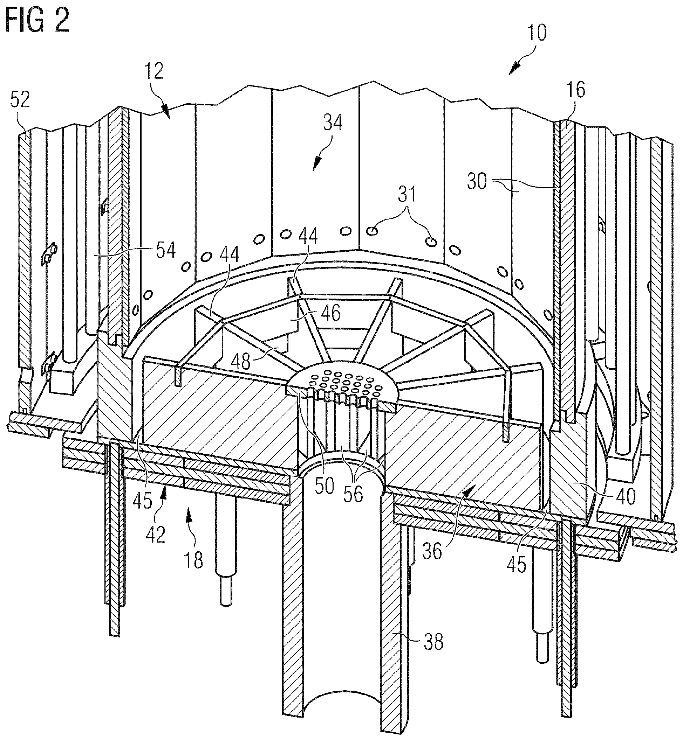

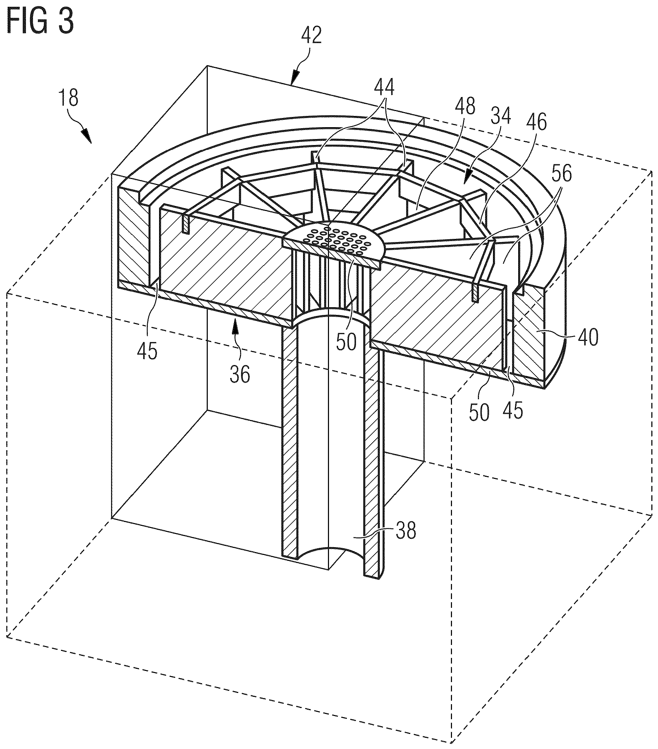

Referring to Fig. 2 and Fig. 3, the gas distribution structure 34 is described in more detail. The gas distribution structure 34 includes a gas inlet 38. The gas inlet 38 can be shaped as a pipe and connects to a gas supply of different gases, as the case may be, that are used in the fluidized bed reactor 10. The gas inlet 38 feeds into the plenum 36. The gas inlet 38 is preferably formed in the radial centre of the gas distribution structure 34.

The gas distribution structure 34 includes a bottom wall 40. The gas distribution structure 34, specifically the bottom wall 40 is connected to the shell 16 at the bottom in a gas-tight manner. The connection can be a flat face sealing or a tongue and groove connection.

The gas distribution structure 34 is formed by a support structure 42. The support structure 42 has a plurality of support struts 44 that radially extend from the gas inlet 38 towards the bottom wall 40. The support struts 44 are in contact with the bottom of the gas distribution structure 34. The support struts 44 extend such that a small radial gap 45 is formed between each support strut 44 and the bottom wall 40.

The support structure 42 may further include a plurality of support ribs 46. The support rib 46 extends between neighbouring support struts 44. The support ribs 46 form an opening 48 between the support struts 44 and the bottom of the gas distribution structure 34. The support ribs 46 preferably extend in a circumferential direction and preferably at the same radial distance from the gas inlet 38.

The gas distribution structure 34 may further include a hole plate 50. The hole plate 50 is preferably formed as a circular disk with a hole pattern in it. The hole plate 50 is shaped such that it can cover the gas inlet 38. The dimensions of the components is generally chosen such that an evenly distributed gas flow can be achieved.

The gas distribution plate 32 is supported by the support structure 42. The gas distribution plate 32 rests thereon by means of gravity and no other fastening elements. Additionally, the gas distribution plate 32 can be held down by the weight of the solid reactant, e.g. SiC.

The fluidized bed reactor 10 may further comprise a casing 52. In contrast to the other components, the casing 52 can be made of metal. The casing 52 completely encloses the reactor chamber 12.

The fluidized bed reactor 10 may further comprise a heating apparatus 54. The heating apparatus 54 is arranged on the bottom 2/3 of the reactor chamber 12. The heating apparatus 54 is preferably arranged between the shell 16 and the casing 52.

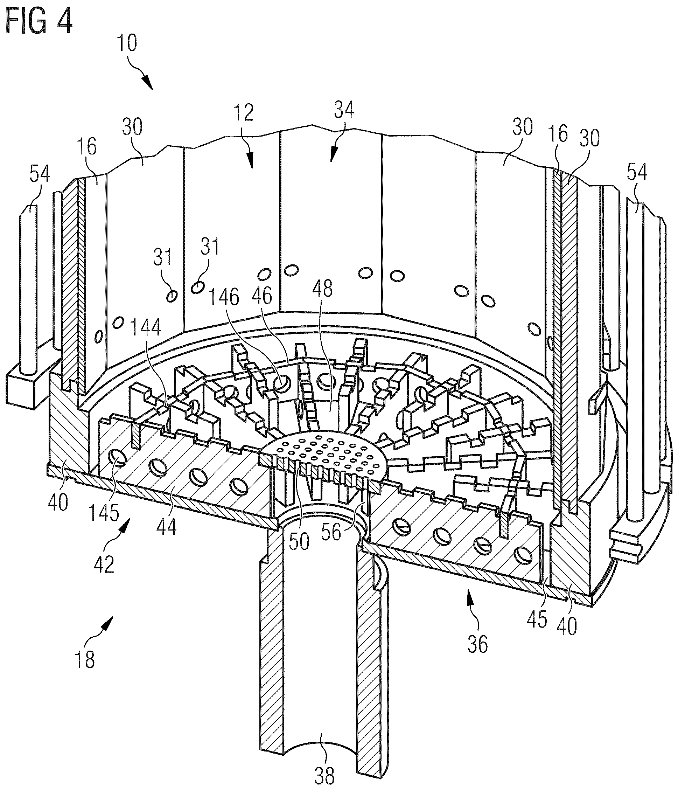

Referring to Fig. 4, another embodiment of the gas distribution structure 34 is described insofar as it differs from the embodiment described in Fig. 2 and Fig. 3.

Similar to the previous embodiments, the support structure 42 has a plurality of support struts 44 that radially extend from the gas inlet 38 towards the bottom wall 40.

The support structure 42 may have additional support struts 144 that are aligned parallel to the radial direction. The additional support struts 144, however, to not extend for the entire radial length. The additional support struts 144 may be disposed within the gas flow channels 56.

The additional support struts 144 may be contact with the bottom of the gas distribution structure 34. The additional support struts 144 extend such that the small radial gap 45 is also formed between each additional support strut 144 and the bottom wall 40.

The additional support struts 144 may extend such that a passage between the gas inlet 38 and the gas flow channel 56 remains open for the gas flow.

The support struts 44 and/or the additional support struts 144 may include a plurality of protrusions and recesses. The protrusions and recesses are formed crenellation-like such that the protrusions may support the gas distribution plate 32 while the recesses allow for a gas flow along the circumferential direction.

The support struts 44 may further include circumferential openings 145. The circumferential openings 145 are disposed roughly at the center line of the support struts 44. The circumferential openings 145 allow for a circumferential gas flow.

Similar to the previous embodiments, the support structure 42 may further include a plurality of support ribs 46. The support ribs 46 may include a plurality of radial openings 146. The radial openings 146 are disposed roughly at the center line of the support ribs 46. The radial openings 146 allow for additional gas flow in the radial direction.

In the following operation of the fluidized bed reactor 10 is described in more detail.

The reactor chamber 12 is filled with carbide particles, e.g., SiC or TiC. The amount can be up to 5 metric tons. Then the solid particles are fluidized with chlorine or a mixture of chlorine and an inert gas. The gas may be heated before being fed to the gas inlet 38. The gas flows through the gas inlet 38 into the plenum 36. In the plenum 36, a portion of the gas flow flows through the hole plate 50 and impinges on the gas distribution plate 32. Another portion flows into each gas flow channel 56 defined between neighbouring support struts 44. The gas flow channel 56 is open towards the gas distribution plate 32. Further, the gas flows beneath the support strut 44 through the opening 48 towards the bottom wall 40. The gas may equilibrate using the radial gaps 45. Due to the configuration of the gas distribution plate 32, the gas flows from the plenum 36 through the gas distribution plate 32 into the reactor chamber 12, with a pressure difference between the plenum 36 and the reactor chamber 12 of as little as 1 mbar.

### List of reference signs:

- 10: fluidized bed reactor
- 12: reactor chamber
- 14: filter assembly
- 16: shell
- 18: gas inlet assembly
- 20: top cover plate
- 22: top wall
- 24: top support plate
- 26: top chamber
- 28: outlet
- 30: shell element
- 31: fastening protrusion
- 32: gas distribution plate
- 34: gas distribution structure
- 36: plenum
- 38: gas inlet
- 40: bottom wall
- 42: support structure
- 44: support struts
- 45: radial gap
- 46: support ribs
- 48: opening
- 50: hole plate
- 52: casing
- 54: heating apparatus
- 56: gas flow channel
- 144: additional support strut
- 145: circumferential opening
- 146: radial opening

## Claims

1. A gas distribution plate (32) suitable for a fluidized bed reactor (10) that is suitable for synthesis of carbide-derived carbon, wherein the gas distribution plate (32) includes pores that are configured to allow for gas to flow through the gas distribution plate (32), when installed in the fluidized bed reactor (10), **characterized in that** the gas distribution plate (32) is made of a plate material that mainly or exclusively consists of a carbon material.

2. The gas distribution plate (32) of claim 1, wherein the pores have a pore size smaller than the D90 particle size of particles that are within the fluidized bed reactor (10) during reaction in the fluidized bed reactor (10).

3. The gas distribution plate (32) of any of the preceding claims, wherein the pores have a pore size smaller than 300 µm, preferably smaller than 200 µm, preferably smaller than 100 µm, preferably smaller than 50 µm, wherein optionally the pore size is greater than 1 µm to 10 µm.

4. The gas distribution plate (32) of any of the preceding claims, wherein the pore volume is smaller than 20000 mm³/g, preferably smaller than 10000 mm³/g, preferably smaller than 9000 mm³/g, preferably smaller than 8000 mm³/g, preferably smaller than 7000 mm³/g.

5. The gas distribution plate (32) of any of the preceding claims, wherein the porosity as measured by Hg porosimetry is at least 85 %, preferably at least 90 %, preferably at least 90.8 %, preferably at least 90.85%.

6. The gas distribution plate (32) of any of the preceding claims, wherein the plate material is metal-free.

7. A gas inlet assembly (18) suitable for a fluidized bed reactor (10) that is suitable for synthesis of carbide-derived carbon, the gas inlet assembly (18) comprising a gas distribution structure (34) and a gas distribution plate (32) of any of the preceding claims, wherein the gas distribution structure (34) comprises a support structure (42) that supports the gas distribution plate (32), and the gas distribution structure (34) is configured for distributing gas flow from a gas inlet (38) into a plenum (36) that is bounded on one side by the gas distribution plate (32).

8. The gas inlet assembly (18) of claim 7, wherein the gas distribution plate (32) and the gas distribution structure (34) are configured to allow gas flow from the plenum (36) through the gas distribution plate (32), and the gas distribution plate (32) prevents particles above a certain size from entering the plenum (36).

9. The gas inlet assembly (18) of claim 7 or 8,
- wherein the support structure (42) includes a plurality of support struts (44) that extend away from the gas inlet (38), and support the gas distribution plate (32); and/or
- wherein the support structure (42) comprises a hole plate (50) that has a pattern of holes formed therein; and/or
- wherein the support structure (42) comprises a plurality of additional support struts (144) that are aligned parallel to the radial direction, wherein each additional support strut (144) is disposed between two adjacent support struts (44).

10. The gas inlet assembly (18) of claim 9, wherein the support structure (42) includes a plurality of support ribs (46) that are supported by neighbouring support struts (44) and extend therebetween, and the support ribs (46) support the gas distribution plate (32); and/or wherein the gas distribution structure (34) comprises the support struts (44), and the support struts (44) bound a plurality of gas flow channels (56) that extend away from the gas inlet (38).

11. The gas inlet assembly (18) of any of the claims 9 or 10, wherein the gas distribution structure (34) comprises the hole plate (50), and the hole plate (50) rests on the support struts (44); and/or wherein the additional support struts (144) are disposed within the gas flow channels (56).

12. The gas inlet assembly (18) of any of the claims 9 11,
- wherein the support struts (44) and/or the additional support struts (144) include a plurality of protrusions and recesses that are configured such that the protrusions are suitable to support the gas distribution plate (32) while the recesses are suitable to allow for a gas flow along the circumferential direction; and/or
- wherein the support struts (44) further include circumferential openings (145) that are configured to allow for a circumferential gas flow; and/or
- wherein the support ribs (46) include a plurality of radial openings (146) that are configured to allow for additional gas flow in the radial direction.

13. A fluidized bed reactor (10) suitable for synthesis of carbide-derived carbon, the fluidized bed reactor (10) comprising a reactor chamber (12), a gas distribution plate (32) of any of the claims 1 to 6 or a gas inlet assembly (18) of any of the claims 7 to 12, wherein the gas distribution plate (32) or the gas inlet assembly (18) are disposed at the bottom of the reactor chamber (12).

14. The fluidized bed reactor (10) of claim 13, wherein the reactor chamber (12) is bounded by a shell (16) that is formed by a plurality of shell elements (30) or by a shell (16) that is made from a single unitary shell element (30), wherein each shell element (30) is made of a shell element material that mainly or exclusively consists a carbon material.

15. The fluidized bed reactor (10) of any of the claims 13 or 14, further comprising a filter assembly (14) that is disposed at the top of the reactor chamber (12) and is configured to prevent particles above a certain particle size from leaving the reactor chamber (12).
